# EUROPEAN PATENT APPLICATION

(11) **EP 2 073 461 A1**
(43) Date of publication of application: **24.06.2009**
(21) Application number: 07291556.4
(22) Date of filing: 18.12.2007
(51) Int. Cl.: H04L 12/56

(54) **Process for delivering at least one data stream from a data source system to a data receiver system through a network**

(71) Applicant: Alcatel Lucent, 75008 Paris (FR)
(72) Inventor: Verchere, Dominique, 91000 Marcoussis (FR)
(74) Representative: Sayettat, Julien Christian

(57) **Abstract**

Process for delivering at least one data stream from a data source system (1) to a data receiver system (3) through a network, wherein the data stream (2) is replicated to deliver twice said data stream through disjoint links of the network, the data stream (2) delivered through the first link being stored in primary storage means (5) and the replicated data stream (4) delivered through the second link being stored in secondary storage means (6) of the data receiver system (3), the data stream (2) and replicated data stream (4) being subsequently compared in order to detect missing data segments, said eventual missing data segments of primary storage means (5) being recovered from the secondary storage means (6).

## Description

The invention relates to a process for delivering at least one data stream from a data source system to a data receiver system through a network.

Global companies with critical data generated by their enterprise applications require very high-throughput interfaces and error-free data transfer functions for data transfer on wide area network.

For example, weather forecasting applications require an enormous quantity of collected measured data from many instruments spread over a country or even a continent. The data have to be transferred rapidly and securely to the supercomputer clusters to be processed and possibly to produce additional new data to be transfer to other centres for analysis that includes additional processing and can generate data.

These types of Grid applications which generate a lot of data put again more challenges on the Internet network as regards fast and large Data Transfers. In this context, the current implementation of TCP extensions for High-Performance can become unsuitable for the Grid applications because of the throughput and packet loss requirements of those Grid applications.

Operator Network infrastructures are typically shared among different types of users and do not support such Grid application performance constraints.

Additionally, TCP Slow Start and Congestion Avoidance lower the data throughput drastically when data segment delays or losses are detected. The Fast Retransmit and Fast Recovery techniques of TCP are also not suitable for Grid Applications. Indeed, under normal conditions the maximal TCP window size is close to being equal to BDP value, this precluding TCP to reach the maximal speed. That leads to an under use of network infrastructures.

Finally, the TCP Retransmission phase and the TCP Recovery phase have heavy impacts on the throughput. During these two phases, the Data source emitting the stream towards the Data receiver has to go back to start phase in order to retransmit the missing data segment and to avoid the buffers at the Data receivers to overflow while waiting for the missing data segments. Consequently, in case of missing data at the data receiver, the data source will continue to send the following data segments while the data receiver node is sending the acknowledgment segment of the missing data segment, only when the acknowledgement segment of the missing data segment is received at the data source, the data source restart to send the missing data segment and goes to slow starts, retransmission and recovery functions.

In order to improve the data transfer throughput, it is necessary to ameliorate the transmission control function by modifying the sequence diagram of control of TCP by reducing the impacts of the TCP Retransmission phase and the TCP Recovery phase.

Consequently, no solution exists today for Network Operators to deliver Grid application connectivity for Enterprise customers requiring high-throughput and error-free data transfers.

The purpose of the invention is to resolve the problem of the prior art by proposing, in particular, a process for high-throughput stream delivering from a data source to a data receiver through a network, said process enabling to deliver missing data segments locally.

For that purpose and according to a first aspect, the invention proposes a process for delivering at least one data stream from a data source system to a data receiver system through a network, wherein:
- the stream is replicated to deliver twice said data stream through disjoint links of the network,
- the data stream delivered through the first link is stored in primary storage means and the replicated data stream delivered through the second link is stored in secondary storage means of the data receiver system,
- the data stream and replicated data stream are compared in order to detect missing data segments,
- if a data segment is missing in first storage means, said data segment is recovered from the secondary storage means.
   According to a second aspect, the invention relates to a system for delivering at least one replicated data stream from a data source system to a data receiver system, said data receiver system comprising:

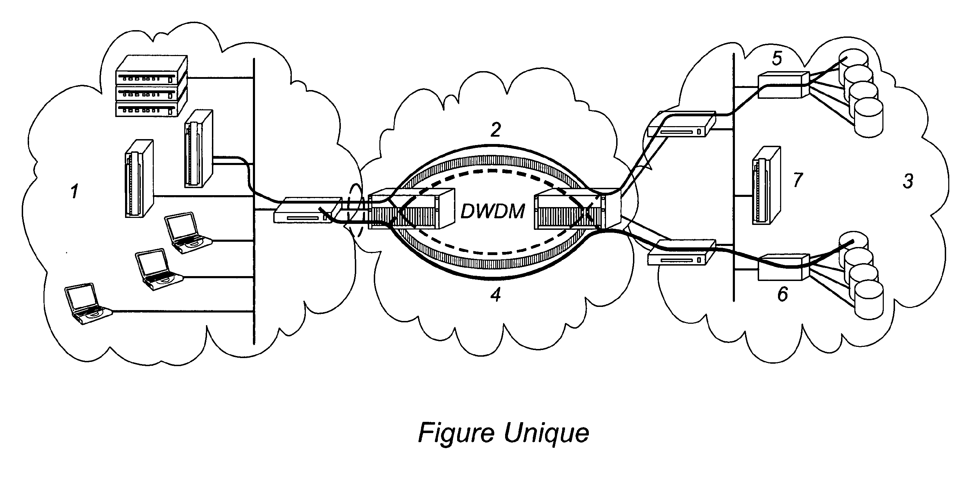

- at least one primary storage means for the data stream,
- one secondary storage means for the replicated data stream,
- a comparison module to compare the data stream stored in the primary storage means and the replicated data stream stored in the secondary storage means,
- a recovery module for recovering missing data segment in first storage means from the secondary storage means.
   The invention will become apparent in the following description made with reference to the appended figure which represents an architecture of the system enabling to carry out the method according to an embodiment of the invention.

In the present invention, a data source system 1 generates at least one data stream 2. Said data stream is to be delivered from the data source 1 to a data receiver system 3 through a network.

At a stage of the process, the data stream 2 is replicated to deliver twice said data stream through disjoint links of the network. The replication is achieved in an edge node of the network. In the present case, the edge node is a branch node.

In the described embodiment, the data stream 2 and replicated data stream 4 are then delivered through a protected Grid application session of the network, through disjoint links of the network. Those two links are two protected end-to-end diverse connections between the data source system 1 and the data receiver system 3.

The data stream 2 and replicated data stream 4 go through two respective edge nodes of the network. Those edge nodes enable to adequately route the data streams to the data receiver system 3.

To implement the process, the invention proposes a system for delivering at least one data stream 2 from a data source system 1 to a data receiver system 3. In the described embodiment, the system is implemented in the data receiver system 3.

For that purpose, the data receiver system 3 comprises at least one primary storage means 5 for the data stream 2 and one secondary storage means for the replicated data stream 4.

The data stream 2 delivered through the first link is stored in the primary storage means 5 and the replicated data stream 4 delivered through the second link is stored in the secondary storage means 6 of the data receiver system 3.

However, during the delivering of the stream to the primary storage means 5 there might be loss of data segments. This also especially occurs during network link failure. During the recovery of the connection to the primary storage means 5 there will be data segment losses during the recovery switching sequence (link failure detection, failure notification and protecting connection activation) of the failed connection. The data segment losses will trigger the TCP sequences for retransmission.

Therefore, to avoid such problems, the data stream 2 and replicated data stream 4 are compared in order to detect missing data segments. To do so, the data receiver system 3 comprises a comparison module 7 to compare the data stream 2 stored in the primary storage 5 means and the replicated data stream 4 stored in the secondary storage means 6.

This comparison module checks that the data segments received onto the primary storage means 5 are identical to the corresponding data segments on the secondary storage means 6 in order to detect missing data segments. It is assumed that the probability to lose the same data segment on two disjoint end-to-end network links is null (i.e. impossible).

Moreover, the comparison is done at a bit level which means that if most data segments from the primary and the secondary storage means are identical, the comparison can be done very fast and at a very low level, saving time and space on the network.

If a data segment is missing in primary storage means 5, said data segment is recovered from the secondary storage means 6. Said recovery is made by means of a recovery module 7 for recovering missing data segment in primary storage means 5 from the secondary storage means 6. Consequently, the missing data segment is received in primary storage means 5 which enables said storage means to integrate a complete data segment.

These two operations of data segment comparison and data segment recovery can be processed right after the data segments are received and written onto the storage means.

The replicated data stream 4 is temporarily stored in the data receiver system 3, data segments being removed from the secondary storage means 6 if said segment is not missing in the primary storage means 5.

Indeed, in order to manage the utile space on the secondary storage means 6, the size of the storage space of the secondary storage means 6 is computed on the basis of the data streams currently delivered on the network and the data streams ready to be delivered from to the data source system 1. More precisely, the elements one which is base the computing of size of the storage space are the quantity of data under the transmission on the transport network and data segments ready to be transmitted and still buffered on the Grid application data source side.

Moreover the set of data segment to be maintained can be reduced. The comparison module 7 operates fast in order to limit the size of the data segments stored in the secondary storage means 6.

By removing the segment data on the secondary storage means 6 already checked on the primary storage means 5, it is possible to share one single secondary storage means 6 between several primary storage means 5.

Indeed, the invention also applies to the delivering of several data streams from the data source system 1 to the data receiver system 3.

In such case, several data streams 2 are stored in respective primary storage means 5 of the data receiver system 3. To do so, the data streams 2 and the replicated data streams 4 are delivered through edge nodes. The interface between the data source system 1 and the edge nodes is a signalling API ("Application Programming Interface"). A RSVP ("ReSerVation Protocol") engine controller embedded in the edge nodes of each link routes the data streams 2 to each primary storage means 5 and the replicated data streams 4 to the secondary storage means 6.

In order to establish the two TCP/IP sessions over two end-to-end diverse connections, the transport network has to support explicit network resource reservation functions e.g. RSVP-TE protocol. Then the edge node (on the data source system side) has to embed an RSVP engine controller in order to trigger the establishment of two end-to-end diverse connections.

The data streams 2 stored in respective primary storage means 5 and replicated data streams 4 stored in the secondary storage means 6 are compared in order to detect missing data segments. If a data segment is missing in one primary storage means 5, said missing data segment is recovered from the secondary storage means 6.

This solution can benefit from the standardization of the data access and method on the primary and secondary storage means. The function of the comparison module can be implemented in line with the eXtensible Access Method (XAM) proposed by Storage Networking Industry Association (SNIA).

## Claims

1. Process for delivering at least one data stream from a data source system (1) to a data receiver system (3) through a network, wherein:
- the data stream (2) is replicated to deliver twice said data stream through disjoint links of the network,
- the data stream (2) delivered through the first link is stored in primary storage means (5) and the replicated data stream (4) delivered through the second link is stored in secondary storage means (6) of the data receiver system (3),
- the data stream (2) and replicated data stream (4) are compared in order to detect missing data segments,
- if a data segment is missing in primary storage means (5), said data segment is recovered from the secondary storage means (6).

2. Process according to claim 1, wherein the replicated data stream (4) is temporarily stored in the secondary storage means (6), data segments being removed from the secondary storage means (6) if said segment is not missing in the primary storage means (5).

3. Process according to claim 1 or 2, in which several data streams (2) are stored in respective primary storage means (5) of the data receiver system (3), wherein:
- data streams (2) stored in respective primary storage means (5) and replicated data streams (4) stored in the secondary storage means (6) are compared in order to detect missing data segments,
- if a data segment is missing in one primary storage means (5), said missing data segment is recovered from the secondary storage means (6).

4. Process according to claim 3, wherein a RSVP engine controller embedded in the edge nodes of each link routes the data streams (2) to each primary storage means (5) and the replicated data streams (4) to the secondary storage means (6).

5. Process according to any of claim 1 to 4, wherein the data streams (2,4) are delivered through a protected Grid application session of the network.

6. Process according to any of claim 1 to 5, wherein the replication is achieved in an edge node of the network.

7. Process according to any of claim 1 to 6, wherein the comparison is done at a bit level.

8. Process according to any of claim 1 to 7, wherein the size of the storage space of the secondary storage means (6) is computed on the basis of the data streams currently delivered on the network and the data streams ready to be delivered from to the data source system (1).

9. System for delivering at least one replicated data stream (2, 4) from a data source system (1) to a data receiver system (3), said data receiver system (3) comprising:
- at least one primary storage means (5) for the data stream (2),
- one secondary storage means (6) for the replicated data stream (4),
- a comparison module (7) to compare the data stream (2) stored in the primary storage means (5) and the replicated data stream (4) stored in the secondary storage means (6),
- a recovery module (7) for recovering missing data segment in primary storage means (5) from the secondary storage means (6).
